# EUROPÄISCHE PATENTSCHRIFT

(11) **EP 3 278 647 B1**
(45) Veröffentlichungstag und Bekanntmachung des Hinweises auf die Patenterteilung: **06.03.2019**
(21) Anmeldenummer: 17401082.7
(22) Anmeldetag: 26.07.2017
(51) Int. Cl.: A01C 7/08, A01C 7/12, A01C 19/00

(54) **LANDWIRTSCHAFTLICHE SÄMASCHINE MIT GETEILTER SÄWELLE**
AGRICULTURAL SEEDING MACHINE WITH SPLIT SOWING SHAFT
SEMOIR AGRICOLE POURVU D'UNE ROUE À SEMENCES FENDUE

(30) Priorität: 01.08.2016 DE 102016114167
(43) Veröffentlichungstag der Anmeldung: 07.02.2018
(73) Patentinhaber: Amazonen-Werke H. Dreyer GmbH & Co. KG, 49205 Hasbergen (DE)
(72) Erfinder: Stier, Roy, 26121 Oldenburg (DE)

(56) Entgegenhaltungen:
- US-A- 4 516 670
- US-A- 4 587 909
- US-B1- 6 240 861

## Beschreibung

Die Erfindung betrifft eine landwirtschaftliche Sämaschine gemäß dem Oberbegriff des Patentanspruches 1.

Derartige Sämaschinen sind aus dem Stand der Technik wie zum Beispiel aus der US 4 578 909 A bekannt. Das auszubringende Material, vorzugsweise Saatgut und/oder Dünger, wird in einem Vorratsbehälter bevorratet. Unterhalb des Vorratsbehälters sind nebeneinander mehrere Dosierorgane angeordnet. Die Dosierorgane dienen der Abgabe des Saatguts in kontrollierten Mengen an die Ausbringelemente. Mittels Förderleitungen wird das dosierte Saatgut von den Dosierorganen zu den Ausbringelementen befördert. Die Dosierorgane weisen Dosierräder auf, welche die Dosierung des Saatguts bewirken. Die Dosierräder sind auf einer Säwelle angeordnet und werden durch die Säwelle rotierend angetrieben. Die Säwelle ist ungefähr in ihrer Mitte unterbrochen und somit in Teilwellen unterteilt. Die Teilwellen sind mittels einer Kuppelvorrichtung miteinander verbindbar. Dadurch wird die Möglichkeit einer halbseitigen Abschaltung des Säbetriebes der Sämaschine geschaffen.
Möchte ein Bediener während des Säbetriebes den Ausbringvorgang auf einer Halbseite seiner Sämaschine stoppen, beispielsweise damit Teilflächen nicht doppelt oder Bereiche außerhalb der zur Aussaat vorgesehenen Fläche bearbeitet werden, muss der Bediener diese Abschaltung manuell vornehmen. Dazu muss er den Führerstand seiner Zugmaschine verlassen und die Verbindung der beiden Teilwellen von Hand lösen. Auf der dann abgeschalteten Halbseite werden die Dosierorgane nicht mehr angetrieben und fördern kein Saatgut mehr zu den ihnen zugeordneten Ausbringelementen. Zudem muss der Bediener die Kuppelvorrichtung aufwendig lösen, wozu er nicht selten Werkzeug benötigt. Da die Kuppelvorrichtung etwa in der Maschinenmitte angeordnet ist, ist sie für den Bediener schlecht erreichbar. Die zur Lösung der Kuppelvorrichtung erforderlichen Arbeiten erfolgen stets an angetriebenen Teilen der Sämaschine. Im Bereich angetriebener Teile einer Maschine herrscht grundsätzlich ein erhöhtes Verletzungsrisiko. Insgesamt ist die manuelle Trennung der Kupplung beider Teilwellen nachteilig, da hierfür der Säbetrieb unterbrochen werden muss, dies viel Zeit kostet und die notwendigen Arbeiten gefährlich für den Bediener sind.

Der Erfindung liegt daher die Aufgabe zugrunde, eine verbesserte Kuppelvorrichtung zu schaffen, welche die beschriebenen Nachteile überwindet.

Diese Aufgabe wird erfindungsgemäß dadurch gelöst, dass die Kuppelvorrichtung ein elektrisches Antriebselement aufweist, welches das erste Umfassungselement entlang der Säwelle verschiebt, wodurch der Eingriff der Formelemente in die Aussparungen der zweiten Teilwelle hergestellt oder aufgehoben wird, wobei bei hergestelltem Eingriff der Formelemente in die Aussparungen der zweiten Teilwelle das erste Umfassungselement drehfest mit der zweiten Teilwelle verbunden ist, wodurch die zweite Teilwelle drehfest mit der ersten Teilwelle verbunden ist.

Durch diese Ausführungsform werden die zuvor beschriebenen Nachteile überwunden. Der Bediener kann eine Halbseite seiner Sämaschine von seinem Führerstand aus ferngesteuert ab- und wieder zuschalten. Dabei geht kaum Zeit verloren, weil dieser Vorgang beispielweise im Vorgewende vor dem Einschwenken in einen schmaleren und/oder nur teilweise zu bearbeitenden Feldbereich erfolgen kann. Aufwendige manuelle Arbeiten an der Kuppelvorrichtung entfallen, wodurch die Verletzungsgefahr des Bedieners erheblich reduziert wird.

Es ist vorteilhaft, dass die Kuppelvorrichtung eine Schraubenfeder umfasst, welche den Eingriff der Formelemente in die Aussparungen sicherstellt. Insbesondere, wenn die beiden Teilwellen während des Betriebs gekuppelt werden sollen, stehen die Formelemente des Umfassungselements oft nicht in der korrekten Position zum Eingriff in die Aussparungen der zweiten Teilwelle. Ebenfalls ist denkbar, dass die erste Teilwelle rotiert und die zweite infolge der vorausgegangenen Abschaltung ruht. Dass die Aussparungen der zweiten Teilwelle die Formelemente des Umfassungselements in einer zum Eingriff geeigneten Position zueinander stehen, wird durch die Schraubenfeder in vorteilhafter Weise sichergestellt.

Es ist von Vorteil, dass das erste Umfassungselement mittels einer klammerartigen Haltevorrichtung gehalten wird und das elektrische Antriebselement an der Haltevorrichtung angreift. Dadurch ist das erste Umfassungselement nicht selbst mit dem Antriebselement verbunden und kann im Bedarfsfall einfach entnommen und/oder ausgetauscht werden. Der Bedarf entsteht beispielsweise im Wartungs- und/oder Verschleißfall.

Ein weiterer Vorteil wird dadurch erreicht, dass die Kuppelvorrichtung ein zweites Umfassungselement aufweist, welches in analoger Weise zum ersten Umfassungselement geeignet ist, die einander zugewandten Enden einer geteilten Vorgelegewelle zu verbinden. Somit kann auch die Vorgelegewelle in ebenso vorteilhafter Weise gekuppelt werden, wie die Säwelle.

Ein besonderer Vorteil wird dadurch erreicht, dass die klammerartige Haltevorrichtung geeignet ist, zusätzlich zum ersten Umfassungselement das zweite Umfassungselement aufzunehmen. Auf diese Weise werden das erste und das zweite Umfassungselement gleichzeitig bewegt. Somit erfolgt das Kuppeln oder Lösen beider Wellen, der Säwelle und der Vorgelegewelle, gleichzeitig. Dadurch kann der Bediener während des Säbetriebes zusätzlich Zeit sparen.

Es ist vorteilhaft, dass die Position der klammerartigen Haltevorrichtung mittels eines Sensors erfasst wird. Wenn die Position der klammerartigen Haltevorrichtung bekannt ist, ist der Kuppelzustand (getrennt oder verbunden) der beiden Teilwellen bekannt. Dem Bediener kann beispielsweise mittels geeigneter Signaleinrichtungen und/oder Anzeigeelemente der Kuppelzustand angezeigt werden. Er muss nicht den Führerstand der Zugmaschine verlassen, um den Kuppelzustand festzustellen. Überdies kann mittels des Sensors festgestellt werden, ob die Position der klammerartigen Haltevorrichtung mit der Sollposition für den eingestellten Kuppelzustand übereinstimmt. Dadurch kann ein Bediener frühzeitig eine Fehlfunktion erkennen, ohne dass die Qualität des Säbildes leidet. Somit werden durch diese Ausgestaltung der Komfort und die Arbeitsqualität gesteigert.

Es ist weiterhin von Vorteil, dass die klammerartige Ausgestaltung der Haltevorrichtung ein werkzeugloses Entnehmen oder Einsetzen der Umfassungselemente ermöglicht. Aufgrund der klammerartigen Ausgestaltung der Haltevorrichtung beruht die Befestigung der Umfassungselemente in der Haltevorrichtung im Wesentlichen auf der Klammerwirkung. Daher können die Umfassungselemente in einfacher Weise eingerastet und/oder Herausgenommen werden. Das Einrasten und/oder Herausnehmen erfolgt ohne Werkzeug. Somit sind derartige Arbeiten besonders komfortabel und einfach zu erledigen. Insbesondere sind sie auch dann durchführbar, wenn kein Werkzeug zur Verfügung steht.

In analoger Weise ist es vorteilhaft, dass die Verschiebbarkeit der Kuppelvorrichtung parallel zur Säwelle ein werkzeugloses Entnehmen oder Einsetzen der Kuppelvorrichtung ermöglicht. Somit kann auch die gesamte Kuppelvorrichtung in einfacher und komfortabler Weise entnommen und/oder eingesetzt werden.

Es wird ein Vorteil erreicht, indem die Dosierorgane unterhalb des Vorratsbehälters nebeneinander quer zur Fahrtrichtung angeordnet sind. Insbesondere bei Sämaschinen, bei denen auch der Vorratsbehälter quer zur Fahrrichtung angeordnet ist, sind somit die Dosierorgane über die gesamte Breite des Vorratsbehälters verteilt. Das gleichmäßige Zuführen von Saatgut ist bei dieser Anordnung in besonders einfacher Weise möglich.

Sind die Dosierorgane nebeneinander quer zur Fahrtrichtung angeordnet, ist es vorteilhaft, dass die Säwelle quer zur Fahrtrichtung angeordnet ist. Somit können die Dosierorgane leicht mittels der Säwelle angetrieben werden.

Durch die Anordnung der Dosierorgane nebeneinander und quer zur Fahrtrichtung sowie durch die quer zur Fahrtrichtung angeordnete Säwelle ist in besonders einfacher Weise eine halbseitige Abschaltung der Dosierorgane realisierbar, da die Teilwellen einer etwa mittig geteilten Säwelle etwa der halben Arbeitsbereite einer derartigen Sämaschine entsprechen.

Weitere Einzelheiten der Erfindung sind der Beispielsbeschreibung und den Zeichnungen zu entnehmen. Die Zeichnungen zeigen
- Fig.1: eine landwirtschaftliche Sämaschine während des Säbetriebes in perspektivischer Darstellung von schräg hinten,
- Fig.2: eine landwirtschaftliche Sämaschine während des halbseitigen Säbetriebes in perspektivischer Darstellung von schräg hinten,
- Fig.3: eine Kuppelvorrichtung an der Säwelle einer landwirtschaftlichen Sämaschine,
- Fig.4: eine Kuppelvorrichtung im die beiden Teilwellen der Säwelle verbindenden Zustand und
- Fig.5: Eine Kuppelvorrichtung im die beiden Teilwellen der Säwelle nicht verbindenden Zustand.

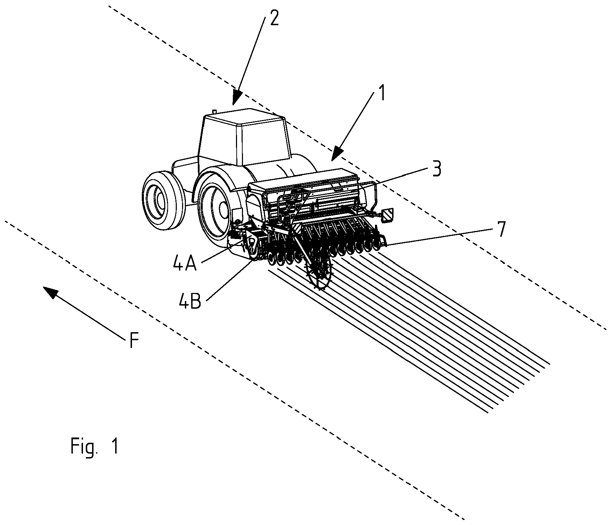

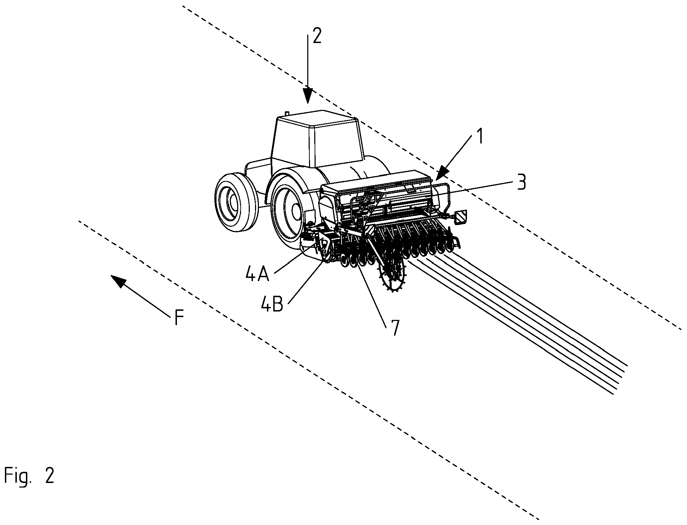

Eine landwirtschaftliche Sämaschine 1, welche im Beispiel der Fig. 1 und 2 als eine an einer Zugmaschine 2 angebaute mechanische Sämaschine ausgeführt ist, weist einen Vorratsbehälter 3 auf. Der Vorratsbehälter 3 dient der Bevorratung des auszubringenden Materials, vorzugsweise Saatgut und/oder Düngemittel. Er stützt sich über einen teilweise dargestellten Rahmen 4A mittels einer Walzeneinheit 4B auf dem Erdboden ab.

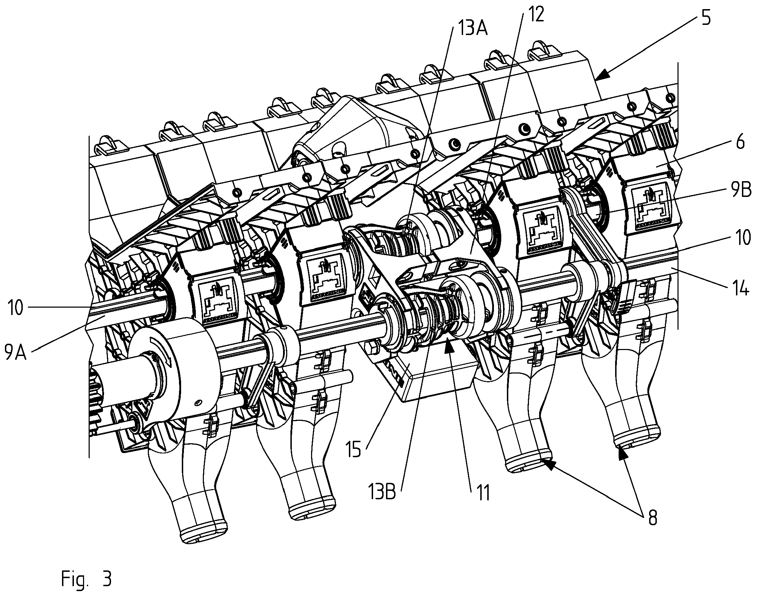

In seinem unteren Bereich weist der Vorratsbehälter 3 einen Auslaufbereich 5 auf. Unterhalb des Auslaufbereichs 5 ist nebeneinander quer zur Fahrtrichtung F eine Vielzahl von Dosierorganen 6 angeordnet, wie Fig. 3 zeigt. Die Dosierorgane 6 dienen der Einspeisung des auszubringenden Saatguts in zu Ausbringelementen 7 führende Förderleitungen 8.

Die Dosierorgane 6 weisen jeweils ein Gehäuse auf, in welchem ein nicht dargestelltes Dosierrad drehbar gelagert ist. Das Dosierrad ist entlang seiner Umfangsrichtung mit einer Vielzahl von Einkerbungen versehen, welche die gleichmäßige Dosierung des Saatguts bewirken.

Die Dosierräder der Dosierorgane 6 sind hier äquidistant nebeneinander auf einer Säwelle 9 angeordnet. Die Dosierräder sind drehfest mit der Säwelle 9 verbunden. Die Säwelle 9 ist quer zur Fahrtrichtung F unterhalb des Vorratsbehälters 3 angeordnet und erstreckt sich zumindest annähernd über die gesamte Behälterbreite. Sie weist entlang ihrer Längsrichtung zumindest eine sich über ihre gesamte Länge erstreckende Aussparung auf. Die Säwelle 9 wird mittels eines mechanischen Antriebs rotierend angetrieben und treibt ihrerseits die mit ihr verbundenen Dosierräder der Dosierorgane 6 an.

Die Säwelle 9 ist in ihrem mittleren Bereich geteilt, sodass sie aus zwei zumindest annähernd gleich langen Teilwellen 9A,9B besteht. Die Arbeitsbreite wird so in zwei Halbseiten unterteilt. Beide Teilwellen 9A,9B sind miteinander drehfest verbindbar. Im nicht verbundenen Zustand wird eine ausgewählte der beiden Teilwellen 9A,9B nicht angetrieben, sodass das Ausbringen von Saatgut auf der dieser Teilwelle zugeordneten Halbseite gestoppt ist. Die entsprechende Halbseite ist abgeschaltet, wie es in Fig. 2 gezeigt ist.

Zum Verbinden beider Halbseiten ist eine Kuppelvorrichtung 11 vorgesehen, wie sie in den Fig. 3 bis 5 gezeigt ist. Die Kuppelvorrichtung 11 umfasst eine klammerartig ausgebildete Haltevorrichtung 12 auf. In der Haltevorrichtung 12 sind mittels Klammerwirkung zwei Umfassungselemente 13 befestigt. In ihrem Innenbereich weisen die Umfassungselemente 13 Formelemente auf. Die Formelemente sind zum Eingriff in die zumindest eine Aussparung 10 vorgesehen. Haltevorrichtung 12 und Umfassungselemente 13 bestehen vorzugsweise aus Kunststoff. Die Kuppelvorrichtung 11 ist derart ausgestaltet, dass sie zu Wartungszwecken werkzeuglos entnommen und/oder ausgetauscht werden kann.

Durch die klammerartige Ausgestaltung der Haltevorrichtung 12 erfolgt die Befestigung der Umfassungselemente 13 durch Einrasten. Dadurch können beispielsweise zu Wartungszwecken die Umfassungselemente 13 leicht entnommen und/oder ausgetauscht werden. Insbesondere ist dazu kein Werkzeug notwendig.

Das erste Umfassungselement 13A dient der Verbindung der beiden Teilwellen 9A,9B der geteilten Säwelle 9. Das zweite Umfassungselement 13B dient der Verbindung einer in analoger weise geteilten Vorgelegewelle 14.

Das erste Umfassungselement 13A ist drehfest mit einer ersten der beiden Teilwellen 9A,9B verbunden. Dazu greifen die Formelemente im Innenbereich des Umfassungselements 13A in die Aussparung 10 der Säwelle 9.

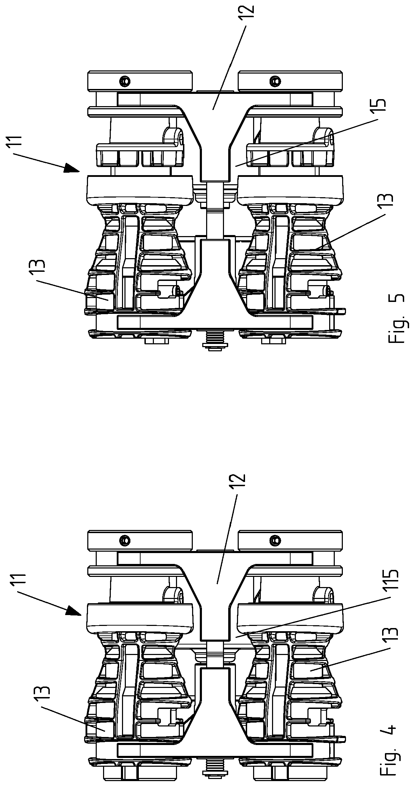

Mittels eines der Kuppeleinrichtung 11 zugeordneten Elektromotors 15 wird entlang der Säwelle 9 die Position der Haltevorrichtung 12 verändert Die beiden Umfassungselemente 13 sind mit der Haltevorrichtung 12 verbunden und ändern ihre Position entlang der Säwelle 9 gemeinsam mit der Haltevorrichtung 12. Auf diese Weise werden die Umfassungselemente 13 zwischen einer Verbindungsposition und einer Trennungsposition verbracht. Fig. 4 zeigt die Umfassungselemente 13 in Verbindungsposition, Fig. 5 zeigt die Umfassungselemente 13 in Trennungsposition.

Die Umfassungselemente 13 werden über die Haltevorrichtung 12 mittels des Elektromotors 15 in Richtung der zweiten Teilwelle 9B bewegt. Dies kann auch während des Betriebes er Sämaschine 1, also bei rotierender erster Teilwelle 9A, erfolgen. Die Formelemente, welche in die zumindest eine Aussparung 10 der ersten Teilwelle eingreifen, bleiben während des Verschiebens des Umfassungselements 13 im Eingriff. Sobald die noch freien Formelemente des Umfassungselements 13 in die zumindest eine Aussparung 10 der zweiten Teilwelle 9B eingreifen, sind beide Teilwellen 9A,9B über das Umfassungselement 13 drehfest miteinander verbunden. Es werden beide Halbseiten angetrieben.

Durch die Rotation der Teilwellen 9A,9B ist denkbar, dass die Formelemente und die Aussparungen 10 nicht in einer für den Eingriff geeigneten Position zueinander stehen. Jedem Umfassungselement 13 ist dazu eine Schraubenfeder zugeordnet, Die Schraubenfeder übt aufgrund der Rotationsbewegung der Säwelle eine Kraft auf das Umfassungselement 13 auf, welche geeignet ist, das Umfassungselement 13 und die Aussparung 10 in eine für den Eingriff der Formelemente in die Aussparungen 10 geeignete Position zu verbringen.

Der beschriebene Kuppelvorgang wird gleichzeitig für die Säwelle 9 und die Vorgelegewelle 14 durchgeführt. Dazu werden beide Umfassungselemente 13A und 13B gleichzeitig verschoben und verbinden in analoger Weise jeweils die beiden Teilwellen der Säwelle 9 und der Vorgelegewelle 14.

Mithilfe eines Sensors wird die Ist-Position der Haltevorrichtung 12 erfasst. Weicht diese Ist-Position von der Soll-Position ab, kann dies dem Bediener mittels einer geeigneten Anzeigevorrichtung angezeigt werden. Somit können Fehlfunktionen erkannt und Fehlbedienungen vermieden werden.

## Patentansprüche

1. Landwirtschaftliche Sämaschine (1) zum Ausbringen von Saatgut und/oder Dünger, aufweisend einen Vorratsbehälter (3), mehrere unterhalb des Vorratsbehälters (3) nebeneinander angeordnete Dosierorgane (6) zur Einspeisung des zu verteilenden Saatguts in zu Ausbringelementen (7) führende Leitungen (8), wobei die Dosierorgane (6) Dosierräder umfassen, welche auf einer rotierend angetriebenen Säwelle (9) angeordnet sind, wobei die Säwelle (9) zumindest annähernd in der Mitte der Sämaschine (1) geteilt ist, wobei die Teilwellen (9A,9B) der geteilten Säwelle (9) mittels einer Kuppelvorrichtung (11) verbindbar sind, die Kuppelvorrichtung (11) ein erstes Umfassungselement (13A) aufweist, welches die einander zugewandten Enden der beiden Teilwellen (9A,9B) umgreift, welches drehfest mit der ersten Teilwelle (9A) verbunden ist und welches in seinem Innenbereich mehrere Formelemente aufweist, wobei die Formelemente zum Eingriff in geeignete Aussparungen (10) der beiden Teilwellen (9A,9B) vorgesehen sind, **dadurch gekennzeichnet, dass** die Kuppelvorrichtung (11) ein elektrisches Antriebselement aufweist (15), welches das erste Umfassungselement (13A) entlang der Säwelle (9) verschiebt, wodurch der Eingriff der Formelemente in die Aussparungen (10) der zweiten Teilwelle (9B) hergestellt oder aufgehoben wird, wobei bei hergestelltem Eingriff der Formelemente in die Aussparungen (10) der zweiten Teilwelle (9B) das erste Umfassungselement (13A) drehfest mit der zweiten Teilwelle (9B) verbunden ist, wodurch die zweite Teilwelle (9B) drehfest mit der ersten Teilwelle (9A) verbunden ist.

2. Sämaschine (1) nach Anspruch 1, **dadurch gekennzeichnet, dass** die Kuppelvorrichtung (11) eine Schraubenfeder umfasst, welche den Eingriff der Formelemente in die Aussparungen (10) sicherstellt.

3. Sämaschine (1) nach zumindest einem der vorangegangenen Ansprüche, **dadurch gekennzeichnet, dass** das erste Umfassungselement (13A) mittels einer klammerartigen Haltevorrichtung (12) gehalten wird und das elektrische Antriebselement (15) an der Haltevorrichtung (12) angreift.

4. Sämaschine (1) nach zumindest einem der vorangegangenen Ansprüche, **dadurch gekennzeichnet, dass** die Kuppelvorrichtung (11) ein zweites Umfassungselement (13B) aufweist, welches in analoger Weise zum ersten Umfassungselement (13) geeignet ist, die einander zugewandten Enden einer geteilten Vorgelegewelle (14) zu verbinden.

5. Sämaschine (1) nach zumindest einem der vorangegangenen Ansprüche, **dadurch gekennzeichnet, dass** die klammerartige Haltevorrichtung (12) geeignet ist, zusätzlich zum ersten Umfassungselement (13A) das zweite Umfassungselement (13B) aufzunehmen.

6. Sämaschine (1) nach zumindest einem der vorangegangenen Ansprüche, **dadurch gekennzeichnet, dass** die Position der klammerartigen Haltevorrichtung (12) mittels eines Sensors erfasst wird.

7. Sämaschine (1) nach zumindest einem der vorangegangenen Ansprüche, **dadurch gekennzeichnet, dass** die klammerartige Ausgestaltung der Haltevorrichtung (12) ein werkzeugloses Entnehmen oder Einsetzen der Umfassungselemente (13) ermöglicht.

8. Sämaschine (1) nach zumindest einem der vorangegangenen Ansprüche, **dadurch gekennzeichnet, dass** die Verschiebbarkeit der Kuppelvorrichtung (11) parallel zur Säwelle (9) ein werkzeugloses Entnehmen oder Einsetzen der Kuppelvorrichtung (11) ermöglicht.

9. Sämaschine (9) nach zumindest einem der vorangegangenen Ansprüche, **dadurch gekennzeichnet, dass** die Dosierorgane (8) unterhalb des Vorratsbehälters (3) nebeneinander quer zur Fahrtrichtung (F) angeordnet sind.

10. Sämaschine (1) nach zumindest einem der vorangegangenen Ansprüche, **dadurch gekennzeichnet, dass** die Säwelle (9) quer zur Fahrtrichtung (F) angeordnet ist.

## Claims

1. Agricultural seeding machine (1) for discharging seed and/or fertilizer, having a storage tank (3), a plurality of metering elements (6) which are arranged one next to the other underneath the storage tank (3) and for the purpose of feeding the seed to be distributed into lines (8) leading to discharge elements (7), wherein the metering elements (6) comprise metering wheels which are arranged on a sowing shaft (9) driven in a rotatory manner, wherein the sowing shaft (9) is divided at least approximately in the centre of the sowing machine (1), wherein the component shafts (9A, 9B) of the divided sowing shaft (9) can be connected to one another by means of a coupling device (11), the coupling device (11) has a first surrounding element (13A) which engages around the ends, facing one another, of the two component shafts (9A, 9B) and which is connected in a rotationally fixed fashion to the first component shaft (9A) and which has a plurality of shaped elements in its inner region, wherein the shaped elements are provided for engagement in suitable cutouts (10) in the two component shafts (9A, 9B), **characterized in that** the coupling device (11) has an electric drive element (15) which shifts the first surrounding element (13A) along the sowing shaft (9), as a result of which the engagement of the shaped elements in the cutouts (10) in the second component shaft (9B) is established or released, wherein when engagement of the shaped elements in the cutouts (10) of the second component shaft (9B) is established, the first surrounding element (13A) is connected in a rotationally fixed fashion to the second component shaft (9B), as a result of which the second component shaft (9B) is connected in a rotationally fixed fashion to the first component shaft (9A).

2. Sowing machine (1) according to Claim 1, **characterized in that** the coupling device (11) comprises a helical spring which secures the engagement of the shaped elements in the cutouts (10).

3. Sowing machine (1) according to at least one of the preceding claims, **characterized in that** the first surrounding element (13A) is held by means of a clamp-like holding device (12), and the electric drive element (15) engages on the holding device (12).

4. Sowing machine (1) according to at least one of the preceding claims, **characterized in that** the coupling device (11) has a second surrounding element (13B) which is suitable, in an analogous fashion to the first surrounding element (13), for connecting the ends, facing one another, of a divided layshaft (14).

5. Sowing machine (1) according to at least one of the preceding claims, **characterized in that** the clamp-like holding device (12) is suitable for accommodating the second surrounding element (13B) in addition to the first surrounding element (13A).

6. Sowing machine (1) according to at least one of the preceding claims, **characterized in that** the position of the clamp-like holding device (12) is sensed by means of a sensor.

7. Sowing machine (1) according to at least one of the preceding claims, **characterized in that** the clamp-like configuration of the holding device (12) permits the surrounding elements (13) to be removed or inserted without a tool.

8. Sowing machine (1) according to at least one of the preceding claims, **characterized in that** the ability of the coupling device (11) to shift parallel to the sowing shaft (9) permits the coupling device (11) to be removed or inserted without a tool.

9. Sowing machine (9) according to at least one of the preceding claims, **characterized in that** the metering elements (8) are arranged underneath the storage tank (3), one next to the other transversely with respect to the direction of travel (F).

10. Sowing machine (1) according to at least one of the preceding claims, **characterized in that** the sowing shaft (9) is arranged transversely with respect to the direction of travel (F).

## Revendications

1. Semoir agricole (1) pour le dépôt de semences et/ou d'engrais, présentant un réservoir de stockage (3), plusieurs organes de dosage (6) disposés l'un à côté de l'autre en dessous du réservoir de stockage (3) pour l'introduction des semences à distribuer dans des conduits (8) menant à des éléments de dépôt (7), dans lequel les organes de dosage (6) comprennent des roues de dosage, qui sont disposées sur un arbre de distribution (9), dans lequel l'arbre de distribution (9) est divisé au moins approximativement au milieu du semoir (1), dans lequel les arbres partiels (9A, 9B) de l'arbre de distribution divisé (9) peuvent être assemblés par un dispositif de couplage (11), le dispositif de couplage (11) présente un premier élément de coquille (13A), qui entoure les extrémités tournées l'une vers l'autre des deux arbres partiels (9A, 9B), qui est assemblé sans rotation au premier arbre partiel (9A) et qui présente plusieurs éléments moulés, dans lequel les éléments moulés sont prévus pour s'engager dans des évidements appropriés (10) des deux arbres partiels (9A, 9B), **caractérisé en ce que** le dispositif de couplage (11) présente un élément d'entraînement électrique (15), qui déplace le premier élément de coquille (13A) le long de l'arbre de distribution (9), ce qui réalise ou ce qui rompt l'engagement des éléments moulés dans les évidements (10) du deuxième arbre partiel (9B), dans lequel lorsque l'engagement des éléments moulés dans les évidements (10) du deuxième arbre partiel (9B) est réalisé le premier élément de coquille (13A) est assemblé sans rotation au deuxième arbre partiel (9B), le deuxième arbre partiel (9B) étant ainsi assemblé sans rotation au premier arbre partiel (9A).

2. Semoir (1) selon la revendication 1, **caractérisé en ce que** le dispositif de couplage (11) comprend un ressort hélicoïdal, qui garantit l'engagement des éléments moulés dans les évidements (10).

3. Semoir (1) selon au moins une des revendications précédentes, **caractérisé en ce que** le premier élément de coquille (13A) est maintenu au moyen d'un dispositif de maintien en forme de pince (12) et l'élément d'entraînement électrique (15) agit sur l'élément de maintien (12).

4. Semoir (1) selon au moins une des revendications précédentes, **caractérisé en ce que** le dispositif de couplage (11) présente un second élément de coquille (13B), qui convient, de façon analogue au premier élément de coquille (13), pour assembler les extrémités tournées l'une vers l'autre d'un arbre intermédiaire divisé (14).

5. Semoir (1) selon au moins une des revendications précédentes, **caractérisé en ce que** le dispositif de maintien en forme de pince (12) est apte à contenir le second élément de coquille (13B) en plus du premier élément de coquille (13A).

6. Semoir (1) selon au moins une des revendications précédentes, **caractérisé en ce que** l'on détecte la position du dispositif de maintien en forme de pince (12) au moyen d'un capteur.

7. Semoir (1) selon au moins une des revendications précédentes, **caractérisé en ce que** la configuration en forme de pince du dispositif de maintien (12) permet un enlèvement ou une mise en place sans outil des éléments de coquille (13).

8. Semoir (1) selon au moins une des revendications précédentes, **caractérisé en ce que** la mobilité du dispositif de couplage (11) parallèlement à l'arbre de distribution (9) permet un enlèvement ou une mise en place sans outil du dispositif de couplage (11).

9. Semoir (9) selon au moins une des revendications précédentes, **caractérisé en ce que** les organes de dosage (8) sont disposés en dessous du réservoir de stockage (3) l'un à côté de l'autre transversalement à la direction de progression (F).

10. Semoir (1) selon au moins une des revendications précédentes, **caractérisé en ce que** l'arbre de distribution (9) est disposé transversalement à la direction de progression (F).
